# EUROPEAN PATENT APPLICATION

(11) **EP 1 185 122 A1**
(43) Date of publication of application: **06.03.2002**
(21) Application number: 01915773.4
(22) Date of filing: 26.03.2001
(51) Int. Cl.: H04Q 7/36, H04J 3/16

(54) **RADIO COMMUNICATION SYSTEM AND CHANNEL ALLOCATION METHOD IN TIME DIVISION MULTIPLEX CONNECTION COMMUNICATION METHOD**

(30) Priority: 29.03.2000 JP 2000092253
(71) Applicant: MATSUSHITA ELECTRIC INDUSTRIAL CO., LTD., Kadoma-shi, Osaka 571-8501 (JP)
(72) Inventor: HIRAMATSU, Katsuhiko, Yokosuka-shi, Kanagawa 238-0031 (JP); KATO, Osamu, Yokosuka-shi, Kanagawa 237-0066 (JP)
(74) Representative: Grünecker, Kinkeldey, Stockmair & Schwanhäusser Anwaltssozietät
(86) International application number: JP0102402
(87) International publication number: WO0174105

(57) **Abstract**

Channel allocation can be performed efficiently even when there is a mix of up/down allocations. A dedicated "uplink" priority table and a dedicated "downlink" priority table are provided, and priorities are controlled separately on the uplink and downlink for all channels.

## Description

### Technical Field

The present invention relates to a channel allocation method and radio communication system in the TDMA (Time Division Multiple Access) communication method.

### Background Art

An example of a channel allocation method in the conventional TDMA communication method will be described based on the document Channel Segregation a Distributed Adaptive Channel Allocation Scheme for Mobile Communication Systems, IEICE TRANSACTIONS, VOL.E74, No.6 JUNE 1991. A flowchart based on this document is shown in FIG.1. In a conventional channel allocation method, efficient channel allocation is implemented by means of the following processing.

First, a base station apparatus defines a priority function P(i) for each channel (radio resource), and allocates the channel with the highest priority. After this allocation has been carried out, when a call occurs a channel that is "of the highest priority" and not "busy" is set for observation, and interference signal power on that channel is measured (Step 1). Next, it is determined whether or not the measured interference signal power is equal to or greater than a predetermined threshold value (Step 2). If the measured interference signal power is determined to be equal to or greater than the predetermined threshold value, that channel is set as "busy" (Step 3). Next, the base station apparatus lowers the priority of that channel (Step 4). Then, the channel with the next highest priority is set for observation, and the processing flow returns to Step 1.

On the other hand, if it is determined in Step 2 above that the measured interference signal power is less than the predetermined threshold value, that channel is set as "idle" (Step 5). Then the priority function of that channel is increased (Step 6).

The above-described steps are carried out for all channels, and after processing has been performed for the last channel, processing is exited (Step 7). If all channels are "busy", a channel cannot be connected, and therefore processing is not performed.

As a result of a base station apparatus managing the priority of each channel in this way, a channel whose priority (possibility of being usable) has been raised in a particular base station will naturally have its priority lowered in another base station. This kind of algorithm is called "channel segregation".

However, conflict between an uplink and downlink is not taken into consideration in this conventional channel segregation method in a Time Division Multiple Access communication method, and so to that extent, there is a problem of not being able to achieve efficient operation.

### Disclosure of Invention

It is an object of the present invention to provide a channel allocation method and radio communication system in a Time Division Multiple Access method that enable efficient channel allocation even when there is a mix of uplinks and downlinks.

This object is achieved by controlling priorities separately on the uplink and downlink for all channels.

### Brief Description of Drawings

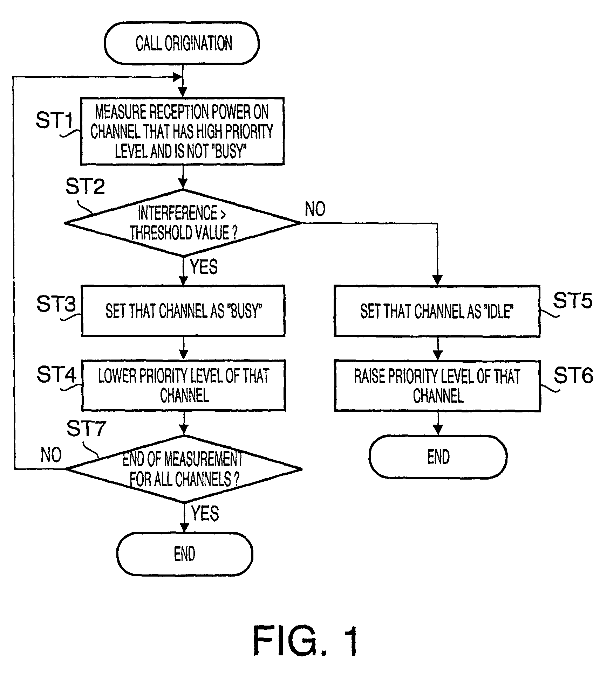

FIG.1 is a flowchart showing conventional channel allocation processing;
FIG.2 is a block diagram showing the configuration of a radio communication system according to an embodiment of the present invention;
FIG.3 is a flowchart showing channel allocation processing in a radio communication system according to an embodiment of the present invention;
FIG.4 is a flowchart showing uplink channel allocation processing in a radio communication system according to an embodiment of the present invention;
FIG.5 is a flowchart showing downlink priority update processing in a radio communication system according to an embodiment of the present invention;
FIG.6 is a flowchart showing downlink channel allocation processing in a radio communication system according to an embodiment of the present invention;
FIG.7 is a flowchart showing uplink priority update processing in a radio communication system according to an embodiment of the present invention; and
FIG.8 is a flowchart showing channel allocation priority update processing at the time of handover in a radio communication system according to an embodiment of the present invention.

### Best Mode for Carrying out the Invention

With reference now to the accompanying drawings, the best mode for carrying out the invention will be explained in detail below.

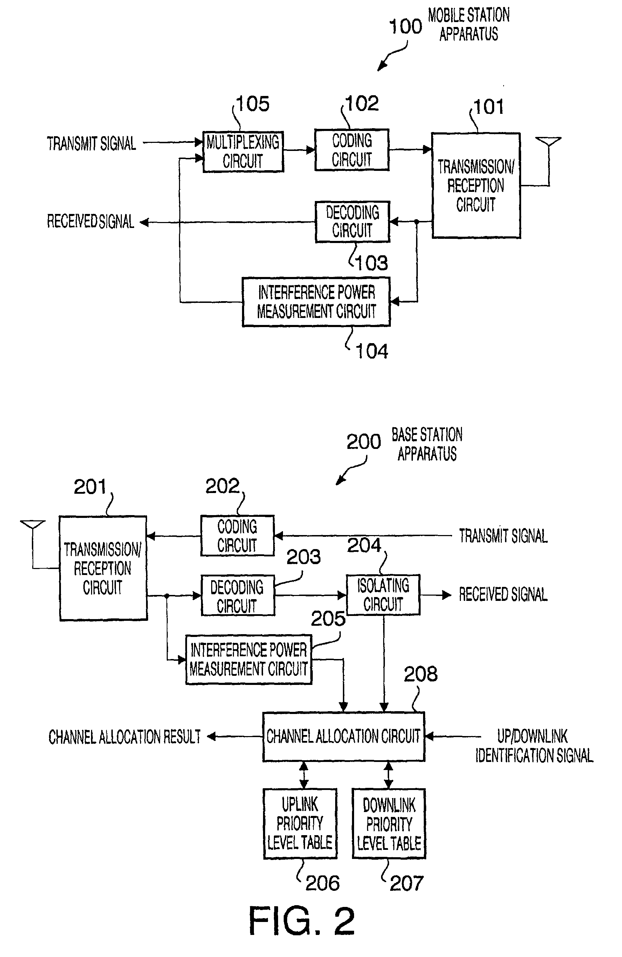

FIG.2 is a block diagram showing the configuration of a radio communication system according to an embodiment of the present invention. In this diagram, a radio communication system of this embodiment comprises a mobile station apparatus 100 and a base station apparatus 200. In an actual radio communication system there is a plurality of both mobile station apparatuses 100 and base station apparatuses 200, but this diagram shows one of each as representative examples.

The mobile station apparatus 100 comprises a transmission/reception circuit 101 that performs transmission and reception of modulated wave signals, a coding circuit 102 that adds forward error collection (FEC) code to transmission data, a decoding circuit 103 that decodes desired data from a received signal demodulated by the transmission/reception circuit 101, an interference signal power measurement circuit 104 that measures interference signal power from a received signal demodulated by the transmission/reception circuit 101 and outputs the result, and a multiplexing circuit 105 that multiplexes output from the interference signal power measurement circuit 104 with a transmit signal and outputs the resulting signal to the coding circuit 102.

On the other hand, the base station apparatus 200 comprises a transmission/reception circuit 201 that performs transmission and reception of modulated wave signals, a coding circuit 202 that changes a carrier wave according to a transmit signal and outputs a modulated signal, a decoding circuit 203 that decodes desired data from a modulated wave signal from the transmission/reception circuit 201, an isolating circuit 204 that isolates interference power information transmitted from the mobile station apparatus 100 from data decoded by the decoding circuit 203, an interference signal power measurement circuit 205 that measures interference signal power from a received signal demodulated by the transmission/reception circuit 201 and outputs the result, uplink priority tables 206 that record uplink priorities for all channels, downlink priority tables 207 that record downlink priorities for all channels, and a channel allocation circuit 208 that performs channel allocation.

Uplink priority table 206 and downlink priority table 207 are provided for each channel. The channel allocation circuit 208 performs uplink or downlink channel allocation based on interference signal power measured in the mobile station apparatus 100, interference signal power measured in the base station apparatus 200, and an up/downlink identification signal. After channel allocation, updating of the uplink priority table 206 and downlink priority table 207 is carried out. As regards channel allocation, when there are many downlink channel allocation requests, the number of downlink channel allocations is large and there are also many entries in the downlink priority table 207 . Conversely, when there are many uplink channel allocation requests, the number of uplink channel allocations is large and there are alsomany entries in the uplink priority table 206. The up/downlink identification signal is generated within the base station apparatus 200, but if, for example, channel allocation is performed by a radio network controller (RNC), it is generated by the RNC apparatus (not shown).

When channel allocation is performed, a signal indicating a slot for which interference signal power is to be measured is sent from the base station apparatus 200 to the mobile station apparatus 100. When the mobile station apparatus 100 receives this indication, it carries out interference signal power measurement for the slot subject to measurement, and transmits the result to the base station apparatus 200. The base station apparatus 200 inputs the interference signal power value reported by the mobile station apparatus 100 to the channel allocation circuit 208, and also carries out measurement of interference signal power in that slot in the base station apparatus itself, and inputs that result to the channel allocation circuit 208. As well as interference signal power values, the slot number for which allocation is desired, and an up/downlink identification signal, are also input to the channel allocation circuit 208.

Next, channel allocation operations in a mobile station apparatus 100 and base station apparatus 200 with the above configurations will be described. The operation descriptions for the mobile station apparatus 100 and base station apparatus 200 will be given together, rather than separately.

### (Channel allocation)

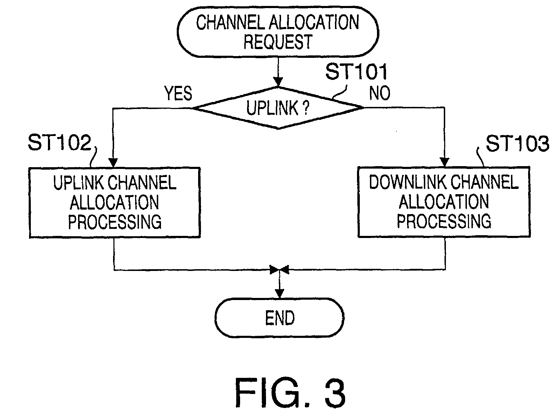

FIG.3 is a flowchart showing channel allocation operations.

First, in Step 101, determination as to uplink or downlink is performed. If the result is an uplink, the processing flow proceeds to Step 102, where uplink channel allocation and updating of priority tables 206 and 207 is carried out. If, on the other hand, the result of Step 101 is a downlink, the processing flow proceeds to Step 103, where downlink channel allocation and updating of priority tables 206 and 207 is carried out. The uplink priority table 206 and downlink priority table 207 are tables provided for each channel respectively for uplink and downlink as described above, and therefore if, for example, there are many downlink channel allocation requests, the number of downlink channel allocations will be large and downlink priorities will be high in the priority table.

### (Uplink channel allocation processing)

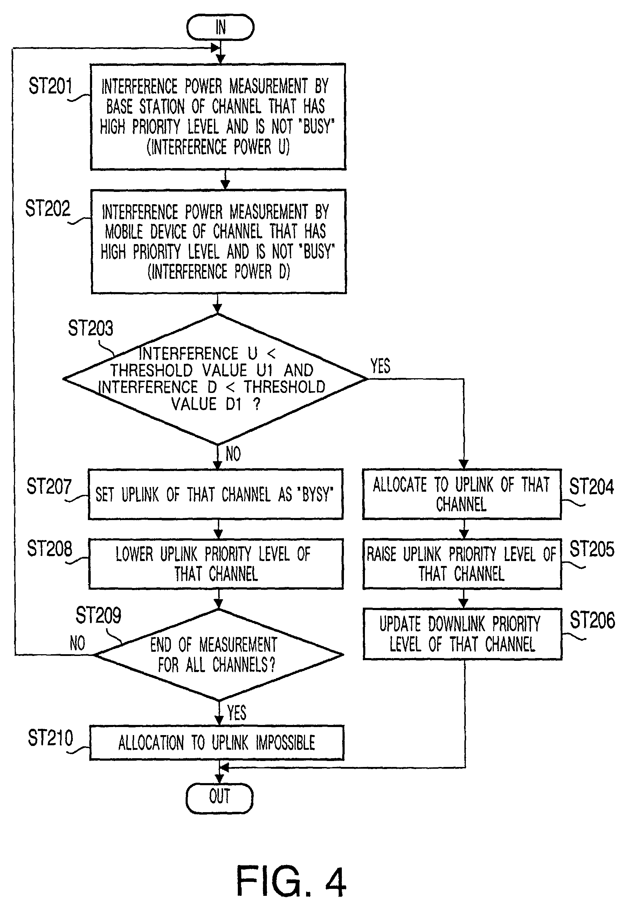

FIG.4 is a flowchart showing uplink channel allocation operations.

If there is an uplink channel allocation request, the base station apparatus 200 measures the interference signal power of a channel that has a high uplink priority and that is not "BUSY". That is, in Step 201, the base station apparatus 200 measures the interference signal power (interference U) of a channel that has a high priority and that is not "BUSY" . Next, in Step 202, the base station apparatus 200 has the mobile station apparatus 100 measure the interference signal power (interference D) of a channel that has a high priority and that is not "BUSY", and report the result.

When the base station apparatus 200 measures the interference signal power of a channel that has a high priority and that is not "BUSY", and furthermore receives the interference signal power measurement result for a channel that has a high priority and that is not "BUSY" from the mobile station apparatus 100, in Step 203 it compares interference signal power U with a threshold value U1, and also compares interference signal power D with a threshold value D1. If interference signal power U is smaller than threshold value U1, the uplink interference signal power is low, and therefore uplink reception quality can be assured. Also, if interference signal power D is smaller than threshold value D1, interference from other systems is small, and it can be judged that interference with other systems will be small if the mobile station apparatus 100 uses the uplink. Therefore, if the judgment in Step 203 is that interference signal power U is smaller than threshold value U1 and interference signal power D is smaller than threshold value D1 (the YES case), the base station apparatus 200 allocates that channel to an uplink (Step 204).

After performing processing for channel allocation to the uplink, in Step 205 the base station apparatus 200 raises the uplink priority of that channel, and then in Step 206 updates the downlink priority of that channel. The update method will be explained later herein.

On the other hand, if the judgment in Step 203 is that interference signal power U is greater than threshold value U1 or interference signal power D is greater than threshold value D1 (the NO case), the processing flow proceeds from Step 203 to Step 207 and the base station apparatus 200 sets the uplink of that channel as "BUSY". Then, in Step 208, the uplink priority of that channel is lowered. Next, in Step 209, it is determined whether or not measurement has ended for all channels. If it is determined that channels remain, processing is repeated from Step 201. If interference signal power U is greater than threshold value U1 or interference signal power D is greater than threshold value D1 for all channels, it is determined in Step 201 that channel allocation is impossible, and processing is exited.

### (Downlink updating)

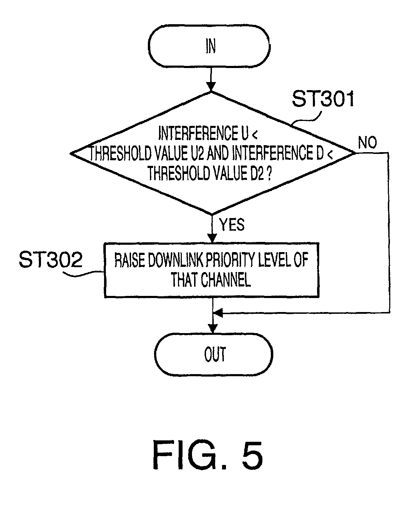

Next, the downlink update processing in above Step 206 will be described using the flowchart shown in FIG.5.

In Step 301, the base station apparatus 200 compares interference signal power U with a threshold value U2, and interference signal power D with a threshold value D2. In this case, threshold value U2 is smaller than above-described threshold value U1, and threshold value D2 is smaller than above-described threshold value D1. If interference signal power U is smaller than threshold value U2, uplink interference signal power is extremely small, and therefore the base station apparatus 200 is able to judge that there is no other system performing transmission in the surrounding area. Also, if interference signal power D is smaller than threshold value D2, interference from other systems is extremely small, and therefore it is possible to judge that no other system is transmitting in the area around the mobile station apparatus 100. Therefore, if the base station apparatus 200 determines in Step 301 that interference signal power U is smaller than threshold value U2 and interference signal power D is smaller than threshold value D2, it judges that there is no other system using that channel, and since allocating that channel to a downlink will not affect other systems even though the uplink priority is high, raises the downlink priority of that channel in Step 302.

### (Downlink channel allocation processing)

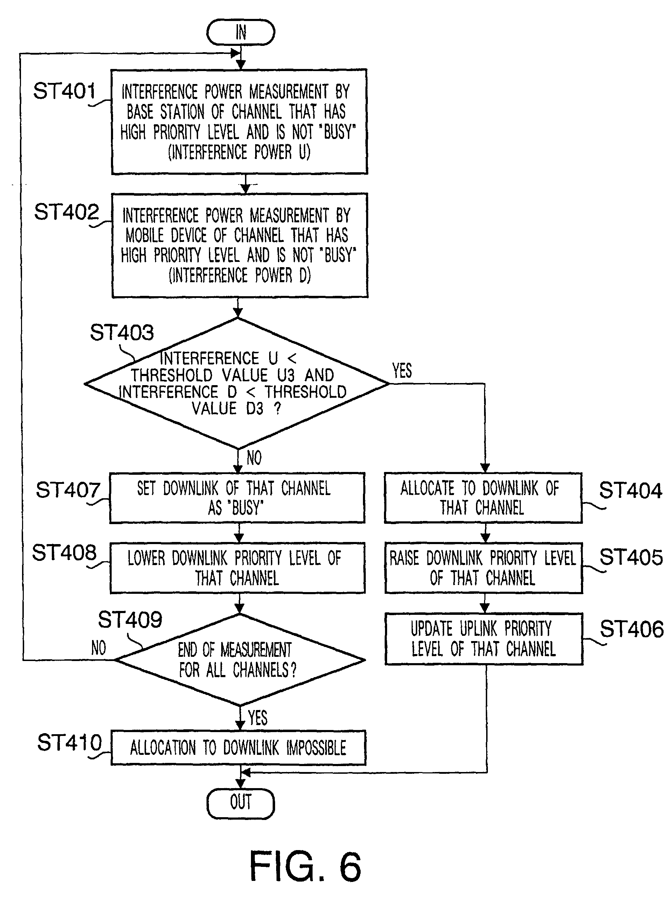

FIG.6 is a flowchart showing downlink channel allocation processing.

If there is a downlink channel allocation request, the base station apparatus 200 measures the interference signal power of a channel that has a high downlink priority and that is not "BUSY". That is, in Step 401, the base station apparatus 200 measures the interference signal power (interference U) of a channel that has a high priority and that is not "BUSY" . Next, in Step 402, the base station apparatus 200 has the mobile station apparatus 100 measure the interference signal power (interference D) of a channel that has a high priority and that is not "BUSY", and report the result.

When the base station apparatus 200 measures the interference signal power of a channel that has a high priority and that is not "BUSY", and furthermore receives the interference signal power measurement result for a channel that has a high priority and that is not "BUSY" from the mobile station apparatus 100, in Step 403 it compares interference signal power U with a threshold value U3, and also compares interference signal power D with a threshold value D3 . If interference signal power U is smaller than threshold value U3 (the YES case), interference from this system is small, and therefore it can be judged that interference with other systems will be small if the downlink is used. Also, if interference signal power D is smaller than threshold value D3, downlink interference is small, and therefore it can be judged that downlink reception quality can be assured. Therefore, if the judgment in Step 403 is that interference signal power U is smaller than threshold value U3 and interference signal power D is smaller than threshold value D3 (the YES case), the base station apparatus 200 allocates that channel to a downlink (Step 404). After allocating the channel to the downlink, in Step 405 the base station apparatus 200 raises the downlink priority of that channel, and then in Step 406 updates the uplink priority of that channel. The update method will be explained later herein.

On the other hand, if the judgment in Step 403 is that interference signal power U is greater than threshold value U3 or interference signal power D is greater than threshold value D3 (the NO case), the processing flow proceeds from Step 403 to Step 407, the downlink of that channel is set as "BUSY", and then in Step 408 the downlink priority of that channel is lowered. Next, in Step 409, it is determined whether or not measurement has ended for all channels. If channels remain, processing is repeated from Step 401. If interference signal power U is greater than threshold value U3 and interference signal power D is greater than threshold value D3 for all channels , it is determined in Step 401 that channel allocation is impossible, and processing is exited.

### (Uplink updating)

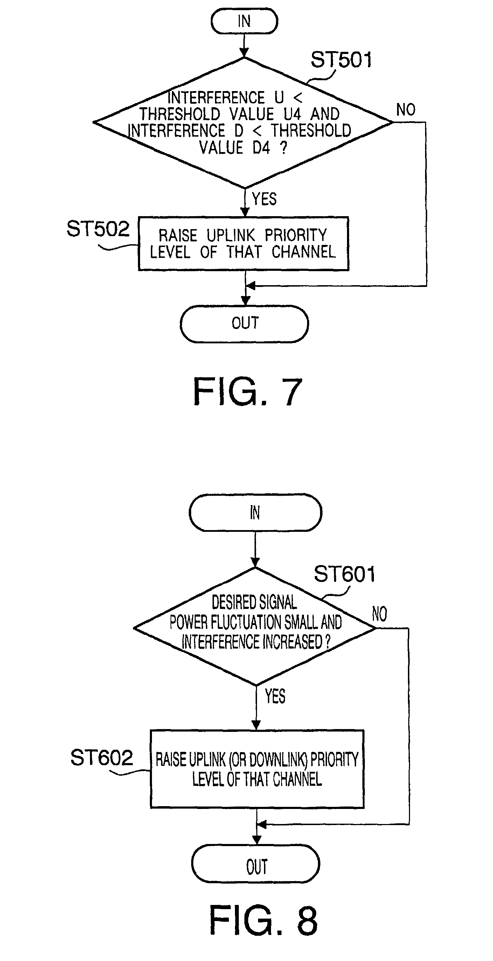

Next, the uplink update processing in above Step 406 will be described using the flowchart shown in FIG.7.

In Step 501, the base station apparatus 200 compares interference signal power U with a threshold value U4, and interference signal power D with a threshold value D4. Here, threshold value U4 is smaller than above-described threshold value U3, and threshold value D4 is smaller than above-described threshold value D3. If interference signal power U is smaller than threshold value U4, uplink interference signal power is extremely small, and therefore it is possible to judge that there is no other system performing transmission in the area around the base station apparatus 200. Also, if interference signal power D is smaller than threshold value D4, interference from other systems is extremely small, and therefore it is possible to judge that no other system is transmitting in the area around the mobile station apparatus 100. Therefore, if the base station apparatus 200 determines in Step 501 that interference signal power U is smaller than threshold value U4 and interference signal power D is smaller than threshold value D4, it judges that there is no other system using that channel, and that allocating that channel to an uplink will not affect other systems even though the downlink priority is high, and raises the uplink priority of that channel in Step 502.

### (Channel allocation priority update processing at time of handover)

Next, channel allocation priority update processing at the time of handover will be described with reference to the flowchart shown in FIG.8.

An opportunity for handover may occur in either or both of the following cases.
(1) When desired signal power diminishes due to the movement of a mobile station
(2) When interference signal power increases with the start of transmission by another base station or mobile device

In case (2), if handover occurs even though fluctuation of the desired signal reception power is small, it can be said to be highly probable that it will be difficult for the channel to maintain communication at that time due to interference. In a case of this kind, the chance of handover is reduced by lowering the priority of that channel. That is to say, in Step 601 in FIG.8, a judgment is made as to handover according to whether fluctuation of the desired signal reception power is small and there is an increase in interference signal power. In the case of handover due to small fluctuation in desired signal reception power and an increase in interference signal power, the up (or down) priority of that channel is lowered in Step 602.

Thus, according to a radio communication system of this embodiment, a dedicated "uplink" priority table and dedicated "downlink" priority table are provided, and priorities are controlled separately on the uplink and downlink for all channels, enabling efficient channel allocation even when there is a mix of uplinks and downlinks.

Also, an interrelationship is established between the uplink priority and downlink priority table, so that finer control can be carried out by increasing the frequency of updating of uplink and downlink priorities. For example, if a particular base station has been able to allocate a particular channel to an uplink, at the same time as the uplink priority of that channel is raised it is determined whether or not allocation as a downlink is possible, and if this is judged to be possible, the downlink priority is also updated. Also, if a particular base station has been able to allocate that channel to a downlink, at the same time as the downlink priority of that channel is raised it is determined whether or not allocation as an uplink is possible, and if this is judged to be possible, the priority as an uplink is also updated.

Moreover, when interference signal power increases with the start of communication by another base station or mobile station, and handover becomes necessary as a result, the priority of a channel susceptible to interference is lowered, and therefore the chance of handover can be reduced.

The above-mentioned flowcharts are programmed and stored as data on a recording medium such as semiconductor memory, magnetic disk, or magneto-optical disk, and a control means (not shown) performs channel allocation control in accordance with a program stored on this recording medium. There are of course separate programs for use by the mobile station apparatus 100 and for use by the base station apparatus 200.

As described above, according to the present invention, channel allocation can be performed efficiently even when there is a mix of uplinks and downlinks, making possible efficient operation.

This application is based on Japanese Patent Application No. 2000-092253 filed on March 29, 2000, entire content of which is expressly incorporated by reference herein.

### Industrial Applicability

The present invention is suitable for use in a mobile communication system such as a mobile phone system using the TDMA (Time Division Multiple Access) communication method.

## Claims

1. A channel allocation method in a Time Division Multiple Access communication method, wherein a priority is controlled separately on an uplink and downlink for all channels used.

2. The channel allocation method in a Time Division Multiple Access communication method according to claim 1, wherein at the time of uplink channel allocation the priority of the same channel of a downlink is updated, and at the time of downlink channel allocation the priority of the same channel of an uplink is updated.

3. The channel allocation method in a Time Division Multiple Access communication method according to claim 2, wherein at the time of uplink channel allocation, when interference signal power in a base station and interference signal power in a mobile station respectively are equal to or less than a predetermined threshold value, the downlink priority is raised.

4. The channel allocation method in a Time Division Multiple Access communication method according to claim 2, wherein at the time of downlink channel allocation, when interference signal power in a base station and interference signal power in a mobile station respectively are equal to or less than a predetermined threshold value, the uplink priority is raised.

5. The channel allocation method in a Time Division Multiple Access communication method according to claim 1, wherein a priority is updated based on a size relationship between desired signal power and interference signal power.

6. The channel allocation method in a Time Division Multiple Access communication method according to claim 1, wherein a priority is lowered when fluctuation of desired signal power is small and interference signal power increases.

7. A channel allocation apparatus that is a computer-readable recording medium that stores a channel allocation program, said channel allocation program comprising channel allocating means for controlling a priority separately on an uplink and downlink for all channels used.

8. A radio communication system including the channel allocation apparatus according to claim 7, said radio communication system comprising:
a plurality of base stations; and
a base station that performs control of call establishment between mobile stations.
